# EUROPEAN PATENT APPLICATION

(11) **EP 4 512 862 A1**
(43) Date of publication of application: **26.02.2025**
(21) Application number: 23791634.1
(22) Date of filing: 29.03.2023
(51) Int. Cl.: C08L 83/07, C08K 3/04, C08K 3/22, C08K 5/29, C08L 83/05

(54) **ADDITION-CURABLE SILICONE RUBBER COMPOSITION AND CURED SILICONE RUBBER PRODUCT**

(30) Priority: 18.04.2022 JP 2022068536
(71) Applicant: SHIN-ETSU CHEMICAL CO., LTD., Tokyo 1000005 (JP)
(72) Inventor: HARA Tatsuei, Annaka-shi, Gunma 379-0224 (JP); KATO Nobu, Annaka-shi, Gunma 379-0224 (JP)
(74) Representative: Sonnenhauser, Thomas Martin
(86) International application number: PCT/JP2023/012832
(87) International publication number: WO 2023/203982

(57) **Abstract**

The present invention relates to an addition-curable silicone rubber composition including (A) 100 parts by mass of alkenyl group-containing organopolysiloxane having two or more alkenyl groups bonded to a silicon atom within one molecule; (B) 0.2 to 20 parts by mass of organohydrogenpolysiloxane containing two or more hydrogen atoms bonded to a silicon atom within one molecule; (C) catalytic amount of a platinum-based catalyst; (D) 0.01 to 5.0 parts by mass of thermally-dissociative blocked polyisocyanate; (E) 0.01 to 10.0 parts by mass of a heat resistance-imparting agent; and (F) 0.01 to 10 parts by mass of water. This can provide the addition-curable silicone rubber composition that can produce a cured material having a low compressive set even in high temperature conditions of 200°C or higher and a silicone rubber cured material.

## Description

### TECHNICAL FIELD

The present invention relates to an addition-curable silicone rubber composition and a silicone rubber cured material obtained by curing the composition.

### BACKGROUND ART

Silicone rubber is excellent in heat resistance, cold resistance, safety, electrical insulation, weather resistance, and durability, and therefore, is used in wide range of fields such as automotive hoses, gasket materials, electrical and electronic parts including copy machine rolls and microwave oven packing, construction materials, and coating materials for fiber.

Further, in these years, with miniaturization and higher output of automobile engines, parts around engines are required to have high heat resistance. Method to further enhance heat resistance of silicone rubber composition includes adding metal oxides such as iron oxide, titanium oxide, and cerium oxide as a heat resistance improver. This makes it possible to obtain a silicone rubber cured material having small physical property change even under higher temperature conditions.

When silicone rubber is used as a gasket such as an O-ring and packing, a low compressive set is required to prevent seal leakage. For decreasing a compressive set, in general, rubber molded by thermal curing needs a long period of secondary vulcanization under high temperature further.

Patent Documents 1 and 2 disclose a silicone rubber composition containing metal oxide (titanium oxide and iron oxide in Patent Document 1, and hydrated cerium oxide and hydrated zirconium oxide in Patent Document 2). Adding the metal oxide is reported to be able to enhance heat resistance of a silicone rubber composition, but there is no discussion about a compressive set.

Patent Document 3 discloses that an addition-curable silicone rubber composition with a triazole-based compound added can reduce a compressive set without the secondary vulcanization. However, it is known that the addition-curable silicone rubber composition containing the triazole-based compound is difficult to improve a compressive set under high temperature conditions such as 200°C or higher.

Patent Documents 4 and 5 disclose a silicone rubber composition containing blocked polyisocyanate. Patent Document 4 discloses such a composition have good adhesive properties with fabric and the adhesive properties can be maintained even after prolonged storage even under a high-temperature and high-humidity condition. Patent Document 5 determines constitution and a content of a thermally-dissociative blocked polyisocyanate composition, and discloses imparting flame retardance as a characteristic of them. However, in these silicone rubber compositions containing such blocked polyisocyanate composition, a compressive set under a temperature condition of 200°C or higher is not improved merely by adding a small amount of the blocked polyisocyanate composition.

### CITATION LIST

### PATENT LITERATURE

Patent Document 1: JP 2016-518461 A
Patent Document 2: JP 2014-031408 A
Patent Document 3: JP 2017-165931 A
Patent Document 4: JP 2019-006956 A
Patent Document 5: JP 2020-070357 A

### SUMMARY OF INVENTION

### TECHNICAL PROBLEM

The present invention has been made in view of the above-described problem. An object of the present invention is to provide an addition-curable silicone rubber composition that can produce a cured material having a low compressive set even in high temperature conditions of 200°C or higher and silicone rubber cured material.

### SOLUTION TO PROBLEM

To solve the problem above, the present invention provides an addition-curable silicone rubber composition comprising:
(A) 100 parts by mass of alkenyl group-containing organopolysiloxane having two or more alkenyl groups bonded to a silicon atom within one molecule;
(B) 0.2 to 20 parts by mass of organohydrogenpolysiloxane containing two or more hydrogen atoms bonded to a silicon atom within one molecule;
(C) catalytic amount of a platinum-based catalyst;
(D) 0.01 to 5.0 parts by mass of thermally-dissociative blocked polyisocyanate;
(E) 0.01 to 10.0 parts by mass of a heat resistance-imparting agent; and
(F) 0.01 to 10 parts by mass of water.

Such an addition-curable silicone rubber composition can produce a cured material having a low compressive set even under high temperature conditions of 200°C or higher.

Further, in the present invention, the component (D) thermally-dissociative blocked polyisocyanate is preferably a reaction product of a thermally-dissociative blocking agent and polyisocyanate derived from at least one kind of diisocyanate selected from the group consisting of aliphatic diisocyanate and alicyclic diisocyanate.

Such a component (D) has a big advantageous effect of improving a compressive set and is preferable.

Further, in the present invention, the component (E) heat resistance-imparting agent is preferably at least one kind selected from the group consisting of iron oxide, titanium oxide doped with metal oxide, and carbon.

Such a component (E) has a big advantageous effect of improving a compressive set and is preferable.

Further, in the present invention, the addition-curable silicone rubber composition preferably comprises further an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).

Such an addition-curable silicone rubber composition can control curing initiating time and is preferable.

Further, in the present invention, the addition-curable silicone rubber composition preferably comprises further 5 to 100 parts by mass of reinforcing silica fine powder as a component (H) based on 100 parts by mass of the component (A).

Such an addition-curable silicone rubber composition can enhance rubber strength and is preferable.

In this event, the component (H) is preferably fumed silica having a specific surface area of 50 m²/g or more by a BET method.

Such a component (H) can enhance rubber strength more surely and is preferable.

Further, the present invention provides a silicone rubber cured material that is a cured material of the addition-curable silicone rubber composition above.

Such a cured material has a low compressive set even under high temperature conditions of 200°C or higher.

### ADVANTAGEOUS EFFECTS OF INVENTION

The present invention can provide an addition-curable silicone rubber composition that can produce a silicone rubber cured material having a low compressive set over a long period even under high temperature conditions such as 200°C, and a silicone rubber cured material obtained by curing the addition-curable silicone rubber composition.

### DESCRIPTION OF EMBODIMENTS

As described above, it has been desired to develop an addition-curable silicone rubber composition that can produce a cured material having a low compressive set even under high temperature conditions of 200°C or higher, and a silicone rubber cured material.

The inventors of the present invention conducted extensive research about the above problems and found that, in an addition-curable silicone rubber composition including:
(A) alkenyl-group-containing organopolysiloxane having two or more alkenyl groups bonded to a silicon atom within one molecule;
(B) organohydrogenpolysiloxane containing two or more hydrogen atoms bonded to a silicon atom within one molecule;
(C) a platinum-based catalyst;
(D) thermally-dissociative blocked polyisocyanate;
(E) a heat resistance-imparting agent; and
(F) water,
by a combination of the components (D), (E), and (F) in specific composition, it is possible to obtain the addition-curable silicone rubber composition that can produce a cured material having a low compressive set even under high temperature conditions of 200°C or higher, and then completed the present invention.

That is, the present invention relates to an addition-curable silicone rubber composition comprising:
(A) 100 parts by mass of alkenyl group-containing organopolysiloxane having two or more alkenyl groups bonded to a silicon atom within one molecule;
(B) 0.2 to 20 parts by mass of organohydrogenpolysiloxane containing two or more hydrogen atoms bonded to a silicon atom within one molecule;
(C) catalytic amount of a platinum-based catalyst;
(D) 0.01 to 5.0 parts by mass of thermally-dissociative blocked polyisocyanate;
(E) 0.01 to 10.0 parts by mass of a heat resistance-imparting agent; and
(F) 0.01 to 10 parts by mass of water.

Hereinafter, the present invention will be described in detail, but the present invention is not limited thereto.

### [Addition-Crable Silicone Rubber Composition]

The inventive addition-curable silicone rubber composition includes the following components (A), (B), (C), (D), (E), and (F). Further, besides these components, components (G) and (H) can be included. Hereinafter, components each are described.

### (A) Alkenyl-Group-Containing Organopolysiloxane

The Component (A) alkenyl-group-containing organopolysiloxane having two or more alkenyl groups bonded to a silicon atom within one molecule is a main agent (a base polymer) of the present composition. The alkenyl group is preferably an alkenyl group having 2 to 10 carbon atoms, more preferably 2 to 8 carbon atoms, and further preferably 2 to 6 carbon atoms. Among these, a vinyl group is most preferable.

In the alkenyl-group-containing organopolysiloxane, an alkenyl group is contained preferably 1.0×10⁻⁶ to 5.0×10⁻³ mol/g, particularly preferably 1.0×10⁻⁵ to 2.0×10⁻³ mol/g. When the content is 1.0×10⁻⁶ to 5.0×10⁻³ mol/g, a rubber-like material can be obtained. The alkenyl group may bond to a silicon atom at the end of molecular chain, to a silicon atom in the middle of the molecular chain, or to both.

Further, as groups other than alkenyl groups, monovalent hydrocarbon groups having 1 to 10 carbon atoms are preferable. Examples of the monovalent hydrocarbon groups having 1 to 10 carbon atoms include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; etc. In particular, it is preferable that 90 mol% or more of all of the substituents, particularly all substituents other than alkenyl groups, are methyl groups.

Structure of the alkenyl-group-containing organopolysiloxane basically has a linear structure, in which both ends of the molecular chain are blocked with a triorganosiloxy groups and the main chain consists of repeating diorganosiloxane units, but it may also partially have a partially branched structure, a cyclic structure, etc.

Regarding the molecular weight of the component (A), an average degree of polymerization is 1,500 or less, usually 100 to 1,500, preferably 150 to 1,000. When the average degree of polymerization is 100 to 1,500, a rubber-like material can be obtained and it has good formability.

In the present invention, the average degree of polymerization is number-average degree of polymerization based on a gel permeation chromatography (GPC) under the following conditions using polystyrene as a standard substance.

### [Measurement Conditions]

Developing solvent: toluene
Flow rate: 0.6 mL/min
Detector: differential refractive index detector (RI)
Column: TSK Guardcolumn Super H-H
   - TSK gel Super H5000(6.0 mm I.D. × 15 cm × 1)
   - TSK gel Super H4000(6.0 mm I.D. × 15 cm × 1)
   - TSK gel Super H3000(6.0 mm I.D. × 15 cm × 1)
(All columns are made by Tosoh Corporation)
   Column temperature: 40°C
   Sample injection amount: 50 µL (a toluene solution having a concentration of 0.5 mass%)

Note that, for the component (A), it is possible to use concurrently one, two, or more kind of compounds that are different each other in structure or polymerization degree, as long as the component (A) is alkenyl-group-containing organopolysiloxane having two or more alkenyl groups bonded to a silicon atom within one molecule, such as those having alkenyl groups bonded to silicon atoms at the both ends of molecular chain.

### (B) Organohydrogenpolysiloxane

The component (B) is organohydrogenpolysiloxane containing at least two, preferably three or more, hydrogen atoms bonded to a silicon atom (hydrosilyl group) within one molecule. The hydrosilyl group in the molecule is crosslinked with an alkenyl group bonded to a silicon atom of the component (A) by hydrosilylation reaction, and acts as a curing agent (a crosslinking agent) to cure the addition-curable silicone rubber composition.

For the component (B) organohydrogenpolysiloxane, compounds to be used suitably have two or more, preferably three or more, further preferably 3 to 100, particularly preferably 4 to 50, hydrogen atoms bonded to a silicon atom (hydrosilyl group) within one molecule.

In this event, substituents other than hydrogen bonded to a silicon atom include monovalent hydrocarbon groups. These includes an alkyl group having 1 to 10 carbon atoms, an aryl group having 6 to 10 carbon atoms, an aralkyl group having 7 to 10 carbon atoms, etc. Specific or preferable examples for each can include the same as groups exemplified as substituents other than an alkenyl group in the component (A).

A molecular structure of the organohydrogenpolysiloxane may be linear, cyclic, branched, or three-dimensional network.

In the organohydrogenpolysiloxane, content of the hydrosilyl group is preferably 0.0005 to 0.020 mol/g, particularly preferably 0.001 to 0.017 mol/g. When contents of the hydrosilyl group is 0.0005 mol/g or more, crosslinking is sufficient. When contents of the hydrosilyl group is 0.020 mol/g or less, the organohydrogenpolysiloxane is stable.

In this event, those that are liquid at room temperature (25°C) and have 2 to 300 carbon atoms (or polymerization degree) in one molecule, particularly 3 to 150, above all around 4 to 100 carbon atoms, are preferably used. A hydrogen atom bonded to a silicon atom may be located at the end of the molecular chain, in the middle of the molecular chain (non-terminal), or at both.

Examples of the component (B) organohydrogenpolysiloxane include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogen cyclopolysiloxane, a methylhydrogensiloxane/dimethylsiloxane cyclic copolymer, methylhydrogenpolysiloxane with both molecular chain ends blocked with a trimethylsiloxy group, a dimethylsiloxane/methylhydrogensiloxane copolymer with both molecular chain ends blocked with a trimethylsiloxy group, dimethylpolysiloxane with both molecular chain ends blocked with a dimethylhydrogensiloxy group, a dimethylsiloxane/methylhydrogensiloxane copolymer with both molecular chain ends blocked with a dimethylhydrogensiloxy group, a methylhydrogensiloxane/diphenylsiloxane copolymer with both molecular chain ends blocked with a trimethylsiloxy group, a methylhydrogensiloxane/diphenylsiloxane/dimethylsiloxane copolymer with both molecular chain ends blocked with a trimethylsiloxy group, a methylhydrogensiloxane /methylphenylsiloxane/dimethylsiloxane copolymer with both molecular chain ends blocked with a trimethylsiloxy group, a methylhydrogensiloxane/dimethylsiloxane/diphenylsiloxane copolymer with both molecular chain ends blocked with a dimethylhydrogensiloxy group, a methylhydrogensiloxane/dimethylsiloxane/methylphenylsilo xane copolymer with both molecular chain ends blocked with a dimethylhydrogensiloxy group, a copolymer consist of a (CH₃)₂HSiO_{1/2} unit, a (CH₃)₃SiO_{1/2} unit, and a SiO_{4/2} unit, a copolymer consist of a (CH₃)₂HSiO_{1/2} unit and a SiO_{4/2} unit, a copolymer consist of a (CH₃)₂HSiO_{1/2} unit, a SiO_{4/2} unit, and (C₆H₅)SiO_{3/2} units, these exemplified compounds in which part or all of the methyl groups are substituted with other alkyl groups, phenyl groups, or the like.

In the compounds exemplified above, the component (B) organohydrogenpolysiloxane may be polyvalent aromatic ring-containing organohydrogenpolysiloxane that has an aromatic ring-containing and usually divalent to tetravalent hydrocarbon skeleton in a part (usually a part of positions of the oxygen atom forming a siloxane bond) of the siloxane skeleton (-Si-O-Si-) constituting the molecule. Examples of the aromatic ring-containing hydrocarbon skeleton above include a phenylene skeleton, a bisphenylene skeleton, a bis(phenylene) ether skeleton, a bis(phenylene)methane skeleton, a 2,2-bis(phenylene)propane skeleton, a 2,2-bis(phenylene)hexafluoropropane skeleton.

The component (B) organohydrogenpolysiloxane is contained in an amount of 0.2 to 20 parts by mass, preferably 0.3 to 10 parts by mass, relative to 100 parts by mass of sum amount of the component (A). Molar ratio (hydrosilyl group / alkenyl group) of hydrogen atoms bonded to a silicon atom (hydrosilyl group) in the component (B) organohydrogenpolysiloxane above to total amount of alkenyl groups bonded to a silicon atom in the components (A) and (B) (especially in the component (A)) preferably 0.8 to 10, more preferably 1.0 to 5. When the molar ratio is 0.8 or more, the composition cures sufficiently (sufficient crosslinking density), and obtained rubber is not sticky. When the molar ratio is 10 or less, no bubble is observed in a silicone rubber molded product and it does not become difficult to release a molded product from a mold used.

### (C) Platinum-Based Catalyst

The component (C) includes platinum-based catalysts such as platinum black, platinum chloride, chloroplatinic acid, reaction products of chloroplatinic acid and monohydric alcohol, complexes of chloroplatinic acid and olefins, and platinum bisacetoacetate.

The platinum-based catalyst is blended in catalytic amount, and in general its blending content in terms of the platinum metal (converted by mass) is preferably be 0.5 to 500 ppm, and can be particularly around 1 to 200 ppm, relative to mass of the component (A). One kind of the component (C) platinum-based catalysts may be used alone, or two or more kinds thereof may be used in combination.

### (D) Thermally-Dissociative Blocked Polyisocyanate

The component (D) thermally-dissociative blocked polyisocyanate is a component that improves a compressive set of a cured material of the inventive addition-curable silicone rubber composition by being added in conjunction with the component (E) a heat resistance-imparting agent. The thermally-dissociative blocked polyisocyanate after thermal dissociation can stabilize the effect of lowering compression set over a long period of time.

The component (D) thermally-dissociative blocked polyisocyanate is preferably a blocked polyisocyanate obtained from a reaction product of a thermally-dissociative blocking agent and polyisocyanates derived from one or more diisocyanates selected from the group consisting of aliphatic diisocyanate and alicyclic diisocyanate. Further, the blocked polyisocyanate is more preferably blocked polyisocyanate obtained from a reaction product with a thermally-dissociative blocked polyisocyanate in an amount of 1 mol or more relative to 1 mol of free NCO groups of polyisocyanate derived from the aforementioned diisocyanate. Examples of aliphatic diisocyanate include butane diisocyanate, pentane diisocyanate, and hexamethylene diisocyanate. Examples of the alicyclic diisocyanate include isophorone diisocyanate, toluene diisocyanate, diphenylmethane diisocyanate, etc. Among these, hexamethylene diisocyanate and toluene diisocyanate are preferable, because they are easily available industrially. One kind of these aliphatic diisocyanate and the alicyclic diisocyanate may be used alone, or two or more kinds thereof may be used in combination.

The polyisocyanate includes oligomers that are the urethanized, the ureated, the allophanated, the biuretated, or the isocyanurated of the aliphatic or alicyclic diisocyanates. Examples include polyisocyanate in which chain length is extended by reaction with a diol body or which is grown three-dimensionally by reaction with a triol body.

For the thermally-dissociative blocking agent, it is preferable to use one kind alone or two or more kinds of compounds selected from the group consisting of oxime-based compounds, alcohol-based compounds, acid amide-based compounds, acid imide-based compounds, phenol-based compounds, amine-based compounds, active methylene-based compounds, imidazole-based compounds, pyrazole-based compounds, and triazole-based compounds.

Thermal decomposition temperature of the thermally-dissociative blocked polyisocyanate depends on a thermally-dissociative blocking agent, but is 100 to 300°C for example. Thermal curing temperature of the addition-curable silicone rubber composition is 40 to 230°C, and heating conditions (primary vulcanization) is about 3 seconds to 160 minutes. The compound is difficult to thermally decompose when stored at room temperature and during primary vulcanization. Therefore, the blocked body is preferably thermally disassociated during secondary vulcanization or when used as a molded product.

Blending amount of the thermally-dissociative blocked polyisocyanate is 0.01 to 5.0 parts by mass, preferably 0.01 to 1.0 parts by mass, relative to 100 parts by mass of the component (A). When less than 0.01 parts by mass, it is difficult to obtain the effect of improving a compressive set. When more than 5.0 parts by mass, curing may be delayed. One of the thermally-dissociative blocked polyisocyanate may be used alone or two or more kinds thereof may be used in combination. When two or more kinds are used in combination, the blending amount may be within the above range as a total.

### (E) Heat Resistance-Imparting Agent

The component (E) heat resistance-imparting agent is a component that remarkably improve a compressive set of the silicone rubber cured material at heigh temperature by being added in conjunction with the component (D). Examples of the component (E) include cerium oxide, cerium hydroxide, iron oxide (for example, yellow iron oxide), titanium oxide (e.g., titanium oxide doped with metal oxide), carbon black (carbon), etc. Among these, iron oxide, titanium oxide doped with metal oxide, and carbon have a great effect on improving a compressive set and are preferable. One of these may be used alone or two or more kind thereof may be used in combination.

The blending amount of the component (E) is 0.01 to 10.0 parts by mass, preferably 0.01 to 5.0 parts by mass, more preferably 0.01 to 1.0 parts by mass, relative to 100 parts by mass of the component (A). When the amount is less than 0.01 parts by mass, it is difficult to obtain an effect of improving a compressive set. When the amount is more than 10.0 parts by mass, physical properties may deteriorate.

### (F) Water

The component (F) water is a component to remarkably improve a compressive set of the silicone rubber cured material at high temperature by being added in conjunction of the component (D). It is presumed that the use of water along with the blocked polyisocyanate promotes the decomposition of the blocking agent of the blocked polyisocyanate under high temperature conditions.

The blending amount of the component (F) is 0.01 to 10.0 parts by mass, preferably 0.01 to 2 parts by mass, and preferably 0.01 to 1 parts by mass, relative to 100 parts by mass of the component (A). When the amount is less than 0.01 parts by mass, it is difficult to obtain the effect of improving a compressive set. When the amount is more than 10 parts by mass, water may bleed onto a surface of the cured material.

### (G) Reaction Control Agent

The inventive addition-curable silicone rubber composition may be added with an acetylene alcohol compound or a compound in which an alcoholic hydroxy group of the acetylene alcohol compound is modified with silane or siloxane, as the component (G) besides components (A) to (F). The component (G) functions as a reaction control agent against the component (C) platinum-based catalyst, and can control curing initiating time by its amount to be added.

The component (G) acetylene alcohol compound may be anything that have both an ethynyl group and a hydroxy group in the same molecule, but it is preferable that an ethynyl group and a hydroxy group is bonded to the same carbon. Specific examples include the following compounds, etc.

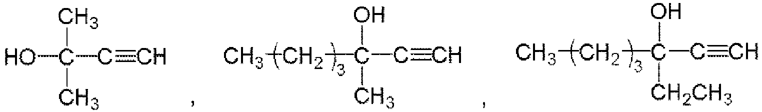

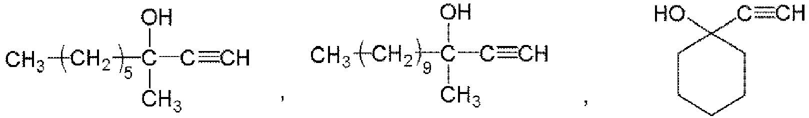

Further, the compound in which an alcoholic hydroxy group of the acetylene alcohol compound is modified with silane or siloxane is bonded to silane or siloxane in a form in which a hydroxy group of the acetylene alcohol compound is transformed to a Si-O-C bond. Examples include the following compounds.

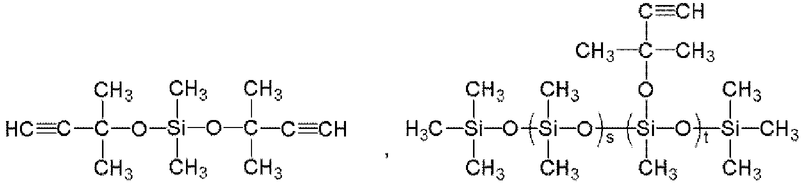

In the above formula, "s" is an integer of 0 to 50, preferably 3 to 20, and "t" is an integer of 1 to 50, preferably 3 to 20.

For blending amount of the component (G), its acetylene bond is preferably 1 to 500 mol, more preferably 1 to 300 mol, and further preferably 2 to 200 mol relative to 1 mol of platinum atom of the component (C). When the amount is 1 to 500 mol, and it is possible to obtain good curability and a sufficient pot life for operation. One of the component (G) may be used alone or two or more kinds thereof may be used in combination. When two or more kinds is used in combination, any blending amount may be acceptable as long as it is within the above range as a total.

### (H) Reinforcing Silica Fine Powder

The inventive addition-curable silicone rubber composition preferably contains reinforcing silica fine powder as the component (H). For the reinforcing silica fine powder, the kind of the silica is not particularly limited, and the silica may be those which can used as a reinforcing agent for a usual rubber. It is possible to use reinforcing silica fine powder that is used for a conventional silicone rubber composition, but it is preferable to use reinforcing silica fine powder having a specific surface area of 50 m²/g or more by a BET method. Especially, precipitated silica (wet silica), fumed silica (dry silica), pyrogenic silica, etc., which have a specific surface area of 50 to 400 m²/g by BET method, notably 100 to 350 m²/g, are suitably used. The fumed silica improves rubber strength, and therefore, is preferable. The reinforcing silica fine powder may be silica fine powder the surface of which has been subjected to hydrophobization treatment with a surface treatment agents such as (usually hydrolysable) organic silicon compounds including chlorosilane, alkoxysilane, and organosilazane for example. On that occasion, the silica fine powder may be those subjected to surface-hydrophobization treatment directly by a surface treatment agent beforehand in a powder state, or may be those subjected to surface-hydrophobization treatment by adding a surface treatment agent in kneading with silicone oil (for example, the alkenyl group-containing organopolysiloxane of the component (A)).

A surface-treatment method may be performed according to a well-known technique. For example, the untreated silica fine powder and a surface treatment agent are put into a kneading machine sealed at normal pressure or a fluidized bed, and mixed at room temperature or under heat treatment (with heating) in the presence of inert gas as necessary. In some cases, a catalyst (hydrolysis accelerator, etc.) may be used to promote the surface treatment. By drying after kneading, surface-treated silica fine powder can be produced. The blending amount of the surface treatment agent may be an amount calculated from an area coated with the surface treatment agent or more.

Specific examples of the surface treatment agent include: silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane, and chloropropyltrimethoxysilane; organic silicon compounds such as polymethylsiloxane and organohydrogenpolysiloxane. The surface of the silica fine powder may be treated by using these agents and the treated powder is used as hydrophobic silica fine powder. As the surface treatment agent, silane coupling agents or silazanes are particularly preferable. One kind of the component (H) reinforcing silica fine powder may be used alone, or two or more kinds thereof may be used in combination.

The blending amount of the component (H) is preferably 5 to 100 parts by mass relative to 100 parts by mass of the component (A).

### [Method for Preparation of Addition-Curable Silicone Rubber Composition]

The inventive addition-curable silicone rubber composition can be obtained even simply by uniformly mixing the above components (A) to (F) and optional components at normal temperature. However, when the component (H) is included, the component (H) is preferably mixed with a surface treatment agent, water, and all or a part of the component (A), and the mixture is subjected to heat treatment using a planetary mixer, a kneader, or the like at a temperature of 100 to 200°C for 1 to 4 hours, is cooled down to room temperature, is added with remaining other components and optional components, and is mixed to obtain the inventive addition-curable silicone rubber composition. Note that, the water blended at this time is added to promote the treatment of the component (H) with the surface treatment agent. Because the excessive water evaporates through the heat treatment, it does not function as the component (F).

### [A Method for Forming of Addition-Curable Silicone Rubber Composition / Silicone Rubber Cured Material]

As a method for forming and curing the addition-curable silicone rubber composition, a routine method can be adopted, but it is possible to select the best forming method suitable for a purpose from injection molding, transfer molding, transfer molding, compression molding, etc. As for the curing conditions, it is possible to adopt heat treatment (primary vulcanization) conditions at 40 to 230°C for about 3 seconds to 160 minutes. Further, if necessary, at option, secondary vulcanization (post curing) may be performed at 40 to 230°C for about 10 minutes to 24 hours.

The cured material obtained by curing the inventive addition-curable silicone rubber composition has preferably a compressive set of 80% or less after 230°C x 125 hours at compressibility rate of 25%. The materials having this value or less can be used suitably for an O-ring or a packing material.

In the present invention, the compressive set is measured according to test method described in JIS K 6262:2013. The standard designates following two test pieces to be used for the measurement.

**[Table 1]**

| shape | Dimensions of main parts (mm) | |
|---|---|---|
| | Diameter | Thickness |
| Large test piece | 29.0 ± 0.5 | 12.5 ± 0.5 |
| Small test piece | 13.0 ± 0.5 | 6.3 ± 0.3 |

The compressive set of the cured material of the inventive addition-curable silicone rubber composition was measured by using these two kinds of test pieces. The compressive set is preferably 80% or less for each test peace. Note that, the compressive set is obtained by the following formula. Compressive set = [{ (Thickness of original test piece) - (Thickness of test piece after heating)} / (Thickness of original test piece)] × 100(%)

Such a compressive set can be achieved by using the composition in which the components (D), (E), and (F) is blended according to the aforementioned composition and mixed uniformly, with the addition-curable silicone rubber composition containing the components (A) to (C).

### EXAMPLE

Hereinafter, the present invention will be specifically described with reference to Examples and Comparative Examples. However, the present invention is not limited thereto. Note that, in the following Examples, "part" means a parts by mass, and average polymerization degree is the number-average degree of polymerization measured according the aforementioned method.

The following are specific examples of each component used in Examples and Comparative Examples of the present invention.
(A) Alkenyl group-containing organopolysiloxane
   (A1) Dimethylpolysiloxane having an average degree of polymerization of 750 and both ends of the molecular chain blocked with dimethylvinylsiloxy groups (amount of alkenyl groups: 0.034 × 10⁻³ mol/g, number of alkenyl groups: 2)
   (A2) Dimethylpolysiloxane having an average degree of polymerization of 220 and both ends of the molecular chain blocked with dimethylvinylsiloxy groups (amount of alkenyl group: 0.12 × 10⁻³ mol/g, number of alkenyl groups: 2)
   (A3) Diorganopolysiloxane (amount of alkenyl groups: 0.065 × 10⁻³ mol/g, number of alkenyl groups: 20) having an average degree of polymerization of 200 and both ends of the molecular chain blocked with trimethylsiloxy groups, in which 10 mol% of the entire diorganopolysiloxane is methylvinylsiloxane units and 90 mol% thereof are dimethylsiloxane units
(B) Organohydrogenpolysiloxane
   (B1) Dimethylsiloxane/methylhydrogensiloxane copolymer (degree of polymerization: 99, amount of hydrosilyl groups: 0.00517 mol/g, number of hydrosilyl groups: 35) having both molecular chain ends blocked with trimethylsiloxy groups and hydrosilyl groups in the side chains
(C) Platinum-based catalyst
   (C1) A toluene solution (containing 1 mass% in terms of platinum atoms) of a complex of platinum and 1,3-divinyl-1,1,3,3-tetramethyldisiloxane
(D) Thermally-dissociative blocked polyisocyanate
   (D1) A mixture of blocked polyisocyanate derived from toluene diisocyanate (TDI) and the component (F) water (blocked polyisocyanate:water = 44:56 [mass ratio], manufactured by Meisei Chemical Industry Co., Ltd., product name: Makernate TP-10 )
   (D2) A mixture of blocked polyisocyanate derived from hexamethylene diisocyanate (HDI) and the component (F) water (blocked polyisocyanate:water = 40:60 [mass ratio], manufactured by Meisei Chemical Industry Co., Ltd., product name: NBP-211)
   (D3) A mixture of blocked polyisocyanate derived from toluene diisocyanate (TDI) and the component (F) water (blocked polyisocyanate:water = 40:60 [mass ratio], manufactured by Meisei Chemical Industry Co., Ltd., product name: Makernate WEB)
   (D4) Toluene diisocyanate (TDI, for Comparative Example)
   (D5) Hexamethylene diisocyanate (HDI, for Comparative Example)
   (D6) Benzotriazole (BTZ, for Comparative Example)
   (D7) (D1) with water distilled off in advance (for Comparative Example)
   (D8) Blocked isocyanate derived from toluene diisocyanate blocked with BTZ (for Comparative Example)
(E) A heat resistance-imparting agent
   (E1) Titanium oxide (manufactured by Evonik, product name: AEROXIDE TiO₂ PF2)
   (E2) Iron oxide (manufactured by Toda Pigment Co., Ltd., product name: Red Garla 130ED)
   (E3) Carbon black (manufactured by Denka Co., Ltd., product name: Denka Black)
(F) Water
(G) Reaction control agent
   (G1) Ethynylcyclohexanol
(H) Reinforcing silica fine powder
   (H1) fumed silica (Aerosil 300, manufactured by Nippon Aerosil Co., Ltd.) having a specific surface area of 300 m²/g by BET method

### [Preparation Example 1]

60 parts of dimethylpolysiloxane (A1) having an average polymerization degree of 750 and both molecular ends blocked with a dimethylvinylsiloxy group, 40 parts of fumed silica (H1) (Aerosil 300, manufactured by Nippon Aerosil Co., Ltd.) having a specific surface area of 300 m²/g by BET method, 8.0 parts of hexamethyldisilazane, and 2.0 parts of water, were mixed at room temperature for 60 minutes. Then, the temperature was raised to 150°C, and the mixture was stirred for 4 hours. Thereafter, the mixture was further added with 30 parts of dimethylpolysiloxane (A1), mixed until homogeneous, and cooled to obtain silicone rubber base A. The water blended at this time was added to promote the treatment of the component (H) with the surface treatment agent. Because the excessive water evaporates through heat treatment, it does not function as the component (F). In addition, because excessive hexamethyldisilazane evaporates during heat treatment, in the calculation of the amount to be blended below, the silicone rubber base A is considered to consist of 100 parts by mass of dimethylpolysiloxane (A1) and 44 parts by mass of fumed silica (H) of which surface is treated with hexamethyldisilazane.

### [Examples 1 to 5, Comparative Examples 1 to 7]

Hereinafter, addition-curable silicone compositions A to L were prepared according to the formulations shown in Table 2. As an example of the preparation method, the method of Example 1 will be described. Other Examples and Comparative Examples were also prepared in the similar manner.

### [Example 1]

144 parts of silicone rubber base A (including 100 parts of dimethylpolysiloxane (A1)) was added with: 23 parts of dimethylpolysiloxane (A2) having an average degree of polymerization of 220 and both molecular chain ends blocked with dimethylvinylsiloxy groups; 1.7 parts of dimethylpolysiloxane (A3) having an average degree of polymerization of 200 and both molecular chain ends blocked with trimethylvinylsiloxy groups, in which 10 mol% of the methyl groups in the side chain (i.e. a monovalent group or atom bonded to a silicon atom in a diorganosiloxane unit constituting the main chain, hereinafter the same) are vinyl groups; 3.6 parts of methylhydrogenpolysiloxane (B1) having both molecular chain ends blocked with trimethylsiloxy groups and hydrosilyl groups in the side chain as a crosslinking agent (a dimethylsiloxane/methylhydrogensiloxane copolymer with both molecular chain ends blocked with trimethylsiloxy groups, degree of polymerization: 99, amount of hydrosilyl groups: 0.00517 mol/g); 0.07 parts of a mixture of the component (F) water and blocked polyisocyanate (D1) derived from toluene diisocyanate (TDI) (Meikanate TP-10, manufactured by Meisei Chemical Works, Ltd.) (blocked polyisocyanate (D1):water (F) = 44:56 [mass ratio]); 0.53 parts of AEROXIDE TiO₂ PF2 (E1) manufactured by Evonik Corporation as a heat resistance-imparting agent titanium oxide; and 0.04 parts of ethynylcyclohexanol (G1) as a reaction control agent (acetylene/Pt atoms = 38 mol/mol), and the mixture was stirred for 15 minutes. Next, the mixture was added with 0.12 parts of a toluene solution (C1) (1% by mass of platinum atoms) of a complex of platinum and 1,3-divinyl-1,1,3,3-tetramethyldisiloxane, and stirred for 30 minutes to obtain a uniform addition-curable silicone rubber composition A.

Note that, in this composition, the molar ratio of the total amount of hydrosilyl groups to the total amount of vinyl groups (hydrosilyl group/vinyl group) of the entire composition is 2.2.

### (Preparation of Cured Product)

After mixing the addition-curable silicone rubber composition A**,** two types of cured product samples having the sizes shown in Table 1 were obtained by press curing at 150°C for 15 minutes. The results of measuring the compression set are shown in Table 2. A compression set was measured at a compressibility rate of 25% according to the method described in JIS K 6262:2013.

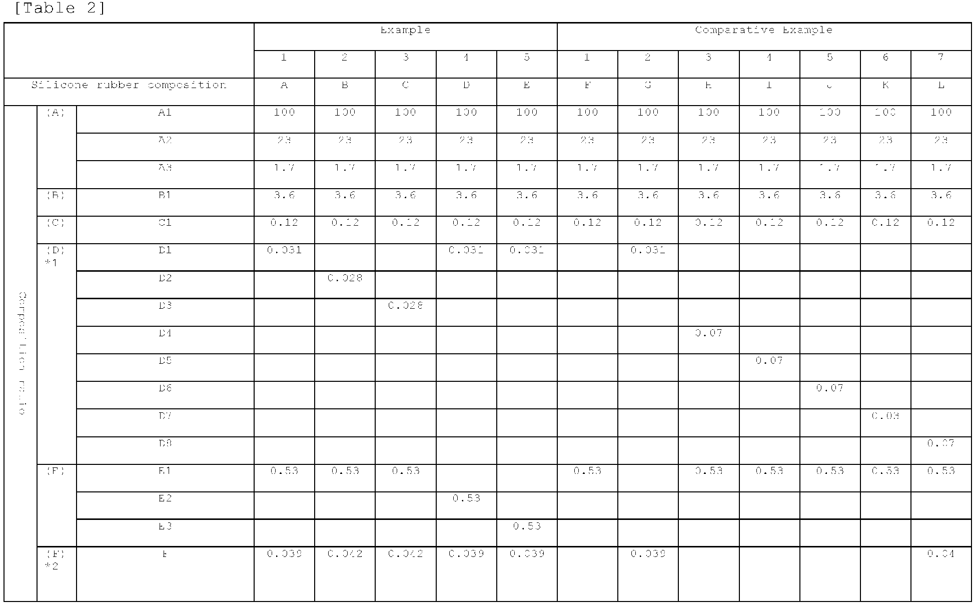

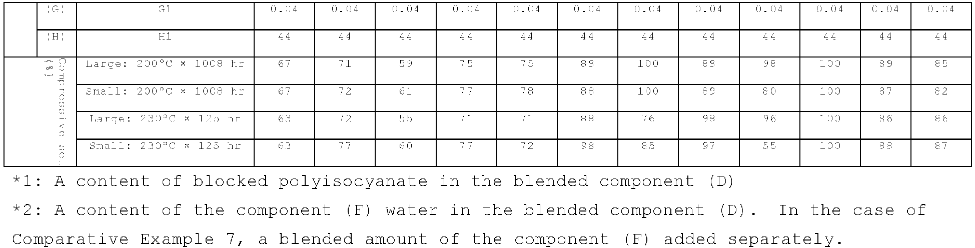

As shown in Table 2, in Examples 1 to 5 using the inventive addition-curable silicone rubber composition, both large test pieces and small test pieces were the cured materials that have a low compressive set even under high temperature conditions of 200°C or higher.

On the other hand, in Comparative Examples 1 and 2 where the components (D) and (E) are not contained concurrently, Comparative Examples 3, 5, and 7 where the component (D) is not thermally-dissociative blocked polyisocyanate, and Comparative Example 6 where the component (F) is not contained, the cured materials does not have a low compressive set under high temperature conditions of 200°C or higher. In Comparative Example 4 where the component (D) is not thermally-dissociative blocked polyisocyanate, small test pieces were the cured materials that have a low compressive set even under high temperature conditions of 200°C or higher, but large test pieces were not the cured materials that have a low compressive set under high temperature conditions of 200°C or higher.

The present description includes the following embodiments.
[1]: An addition-curable silicone rubber composition comprising:
   (A) 100 parts by mass of alkenyl group-containing organopolysiloxane having two or more alkenyl groups bonded to a silicon atom within one molecule;
   (B) 0.2 to 20 parts by mass of organohydrogenpolysiloxane containing two or more hydrogen atoms bonded to a silicon atom within one molecule;
   (C) catalytic amount of a platinum-based catalyst;
   (D) 0.01 to 5.0 parts by mass of thermally-dissociative blocked polyisocyanate;
   (E) 0.01 to 10.0 parts by mass of a heat resistance-imparting agent; and
   (F) 0.01 to 10 parts by mass of water.
[2]: The addition-curable silicone rubber composition according to the above [1],
   wherein the component (D) thermally-dissociative blocked polyisocyanate is a reaction product of a thermally-dissociative blocking agent and polyisocyanate derived from at least one kind of diisocyanate selected from the group consisting of aliphatic diisocyanate and alicyclic diisocyanate.
[3]: The addition-curable silicone rubber composition according to the above [1] or [2],
   wherein the component (E) heat resistance-imparting agent is at least one kind selected from the group consisting of iron oxide, titanium oxide doped with metal oxide, and carbon.
[4]: The addition-curable silicone rubber composition according to the above [1], [2], or [3],
   further comprising an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).
[5]: The addition-curable silicone rubber composition according to the above [1], [2], [3], or [4],
   further comprising 5 to 100 parts by mass of reinforcing silica fine powder as a component (H) based on 100 parts by mass of the component (A).
[6]: The addition-curable silicone rubber composition according to the above [5],
   wherein the component (H) is fumed silica having a specific surface area of 50 m²/g or more by a BET method.
[7]: A silicone rubber cured material that is a cured material of the addition-curable silicone rubber composition according to the above [1], [2], [3], [4], [5], or [6].

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An addition-curable silicone rubber composition comprising:
(A) 100 parts by mass of alkenyl group-containing organopolysiloxane having two or more alkenyl groups bonded to a silicon atom within one molecule;
(B) 0.2 to 20 parts by mass of organohydrogenpolysiloxane containing two or more hydrogen atoms bonded to a silicon atom within one molecule;
(C) catalytic amount of a platinum-based catalyst;
(D) 0.01 to 5.0 parts by mass of thermally-dissociative blocked polyisocyanate;
(E) 0.01 to 10.0 parts by mass of a heat resistance-imparting agent; and
(F) 0.01 to 10 parts by mass of water.

2. The addition-curable silicone rubber composition according to claim 1,
wherein the component (D) thermally-dissociative blocked polyisocyanate is a reaction product of a thermally-dissociative blocking agent and polyisocyanate derived from at least one kind of diisocyanate selected from the group consisting of aliphatic diisocyanate and alicyclic diisocyanate.

3. The addition-curable silicone rubber composition according to claim 1,
wherein the component (E) heat resistance-imparting agent is at least one kind selected from the group consisting of iron oxide, titanium oxide doped with metal oxide, and carbon.

4. The addition-curable silicone rubber composition according to claim 2,
wherein the component (E) heat resistance-imparting agent is at least one kind selected from the group consisting of iron oxide, titanium oxide doped with metal oxide, and carbon.

5. The addition-curable silicone rubber composition according to claim 1,
further comprising an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).

6. The addition-curable silicone rubber composition according to claim 2,
further comprising an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).

7. The addition-curable silicone rubber composition according to claim 3,
further comprising an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).

8. The addition-curable silicone rubber composition according to claim 4,
further comprising an acetylene alcohol compound or a compound in which an alcoholic hydroxy group of the acetylene alcohol compound is modified with silane or siloxane as a component (G), wherein amount of acetylene bonds is 1 to 500 mol based on 1 mol of platinum atoms of the component (C).

9. The addition-curable silicone rubber composition according to any one of claims 1 to 8,
further comprising 5 to 100 parts by mass of reinforcing silica fine powder as a component (H) based on 100 parts by mass of the component (A).

10. The addition-curable silicone rubber composition according to claim 9,
wherein the component (H) is fumed silica having a specific surface area of 50 m²/g or more by a BET method.

11. A silicone rubber cured material that is a cured material of the addition-curable silicone rubber composition according to any one of claims 1 to 8.

12. A silicone rubber cured material that is a cured material of the addition-curable silicone rubber composition according to claim 9.

13. A silicone rubber cured material that is a cured material of the addition-curable silicone rubber composition according to claim 10.
